# EUROPEAN PATENT APPLICATION

(11) **EP 4 575 628 A1**
(43) Date of publication of application: **25.06.2025**
(21) Application number: 22959640.8
(22) Date of filing: 30.11.2022
(51) Int. Cl.: G02F 1/167, G02F 1/1676, G02F 1/1675

(54) **REFLECTIVE CUSTOM COLOR DISPLAY DEVICE**

(30) Priority: 23.09.2022 KR 20220120488
(71) Applicant: NSpectra Co., Ltd., Daejeon 34129 (KR)
(72) Inventor: LEE, Dongjin, Suwon-si, Gyeonggi-do 16527 (KR); KIM, Chul Am, Daejeon 64022 (KR)
(74) Representative: Gassner, Birgitta
(86) International application number: PCT/KR2022/019225
(87) International publication number: WO 2024/063210

(57) **Abstract**

The present invention relates to a panel structure for a reflective custom color display device on the basis of electrophoresis technology, and a method for controlling same, and more specifically, to a panel structure for a reflective display device and a method for controlling same wherein various colors can easily be implemented by combining electrophoretic particles having unique colors without a complicated manufacturing process, an electrically complicated driving method is not required, and stable color reproducibility can be secured when repeatedly driven.

## Description

### TECHNICAL FIELD

The present invention relates to a reflective custom color display device using an electrophoresis technology and a method for controlling the same, and more particularly, to a reflective custom color display device which is capable of being easily implemented by combining electrophoretic particles having unique colors without a complicated manufacturing process and in which an electrically complicated driving method is not required, and stable color reproducibility is secured when repeatedly driven, and a method for controlling the same.

### BACKGROUND ART

An electrophoresis technology-based display device is a reflective display device that displays colors or information using a phenomenon in which, when electric field is generated by a voltage applied from the outside, particles move toward an electrode to which a voltage having an opposite polarity with respect to a polarity of charges of the particles is applied. The electrophoretic display devices may be classified into types in which a medium through which positively or negatively charged particles move is air or a fluid.

Particularly, in the electrophoretic display devices in which the medium is the fluid, a method for implementing specific colors may include i) a method for displaying various colors by disposing a color filter on an upper portion of the display device, ii) a method for displaying colors using colored fluids, and iii) a method for displaying colors using colors of electrophoretic particles.

i) In the case of the color filter method, a driving method is simple, but due to a separate process and configurations of the display device, optical characteristics such as a reflectivity and contrast ratio are deteriorated, and there are problems such as a relatively complicated manufacturing process and high manufacturing cost, and thus, it is currently applied only to relatively expensive e-books.

ii) In the case of the method using the colored fluids, a dye used to allow the fluids have specific colors is vulnerable to ultraviolet rays, the dye is easily discolored and has a short lifespan, a narrow operating temperature range, unstable electrical characteristics, and relatively high power consumption, and is relatively weak in optical characteristics such as reflectivity and contrast ratio, and thus, it is a technology that is not currently used in the major markets.

iii) In the case of the method using the colors of electrophoretic particles, according to the related art, two types of electrophoretic particles having different polarities and colors are used to implement two colors by changing a direction of the applied electric field, and in the case of using two or more types of particles, at least one type of electrophoretic particle is set to have a difference in threshold voltage or response time compared to other electrophoretic particles so that an intensity and an applied time of a driving voltage are adjusted to express the colors. In the case of the method using the two or more types of particles having a difference in threshold voltage or response time, when compared to the color filter method, it has the advantages of a simple manufacturing method, easy processability, and excellent color reproducibility. However, the driving method for independently controlling each particle is relatively very complicated, an update time for updating the colors or information is relatively long, and electrical energy required for each particle to move is different, and thus, there are many restrictions in securing uniform color characteristics during repeated driving. In addition, complicated driving pulses applied to implement the specific colors may cause excessive flickering (screen flickering) during a color conversion process, thereby causing visual discomfort to consumers. In addition, there is a problem in that the operating temperature range is relatively narrow because a deviation of the threshold voltage or response time of the particles is narrowed or widened depending on the change in an external temperature. For this reason, in the case of the color implementation technologies using the color particles, in the related art, there are no major constraints on the update time for the information update, and it is mainly applied to electronic labels and advertising devices that are capable of displaying complicated information and require excellent visibility.

In the related art, the electrophoretic displays have been mainly used in the display devices that are focused on resolution, readability, and full-color implementation, but recently, the electrophoretic displays have begun to be applied to home appliances, furniture, and interior design that are focused on the design. In the case of the electrophoretic displays applied to products that are focused on the design, the electrophoretic displays have to be able to stably and reproducibly implement unique and diverse custom colors that match the environment in which the product is used without causing visual discomfort to consumers, and due to its characteristics that require a long lifespan in a relatively harsh environment compared to the display devices, performance is essential. Thus, in the case of the products that are focused on custom colors, compared to the electrophoretic display devices using the color filters and the color fluids, which have poor color reproducibility and are vulnerable to processability and lifespan, the electrophoretic display device that are capable of implementing colors having the unique colors of the electrophoretic particles with excellent color reproducibility and easy processability is relatively suitable.

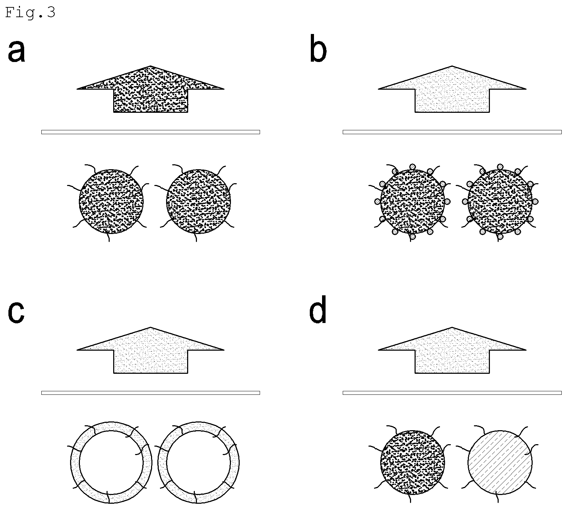

The method for manufacturing the electrophoretic particles having the specific unique colors includes a method for applying a functional group that imparts a charge to a surface of a particle having a unique color (FIG. 3a); a method for primarily applying a material such as particles having a specific color to be implemented on a surface of a mother particle with a unique color and having a size smaller than that of the mother particle, and then secondarily applying a functional group (FIG. 3b), a method for applying a functional group after dyeing the surface of the particle with a substance such as a dye (FIG. 3c), and a method for mixing the particles with different unique colors (FIG. 3d) so that the specific colors are implemented. As illustrated in FIGS. 3B and 3c, in the methods for applying the substance with the specific color on the surface of the particle, during a surface modification reaction for introducing the functional group to the mother particles to impart the charge to the particles, there are many restrictions on surface modification reactions due to second materials having different properties disposed on the surface of the particle, and complicated manufacturing processes may be required, and also, since there is a deviation in driving voltage and lifespan between the final manufactured electrophoretic particles due to unstable and unbalanced surface charge coating, there is a problem of poor color reproducibility when operated repeatedly. As illustrated in FIG. 3a and 3d, in the methods for manufacturing the electrophoretic particles using the unique color of the mother particles, in the terms of the manufacturing, it is possible to stably apply the charged functional group onto the mother particle, and the particles may be reproducibly controlled. However, in the method illustrated in FIG. 3a, the number of mother particles having the unique colors to which the functional groups are stably applied is limited, and it takes a lot of time and cost to develop and manufacture the color particles for implementing various custom colors demanded by the consumers, and thus, as illustrated in FIG. 3d, the method for implementing the various colors requested by the consumers by adjusting the combination and mixing ratio of the particles having different unique colors of the existing secured mother particles has many advantages in terms of development the period, manufacturing cost, manufacturing time, etc.

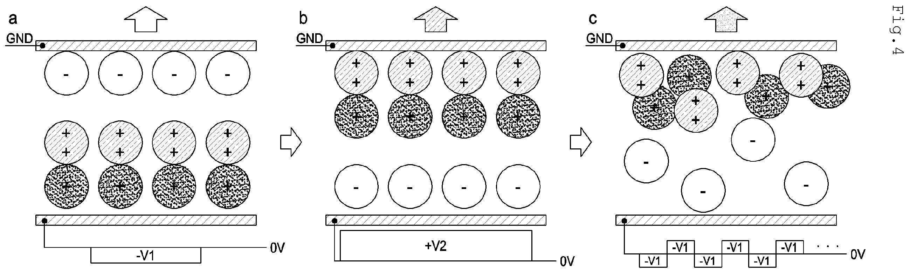

FIGS. 4a to 4c are cross-sectional views illustrating a structure of the conventional display device that implements a specific color by using electrophoretic particles having different unique colors and threshold voltages. In the method of implementing the specific color through the combination of the electrophoretic particles having the different unique colors as illustrated in FIG. 3d, according to the related art, a deviation in the threshold voltage or response time of each electrophoretic particle is provided to control the intensity and time of the applied voltage, etc., thereby electrically mixing the particles having different unique colors to implement the specific custom color. However, in the method according to the related art, as the electrophoretic particles having different colors are added, as illustrated in FIG. 4, there is a problem in that a driving waveform for independently controlling each particle is very complicated to further increase in update time and deteriorate in color reproducibility during the repeated driving. In addition, as illustrated in FIG. 4b, colors that are not requested by the consumers are initially implemented on a display part in the process of converting the colors, and then, as illustrated in FIG. 4c, in the process of electrically moving and mixing the particles, a flickering phenomenon that the consumers feel visually uncomfortable may appear repeatedly for several seconds to several tens of seconds, and as the direction of the applied electric field (i.e., the polarity of the applied voltage) is repeatedly changed, some of the electrophoretic particles having opposite charges may be mixed to deteriorate the color reproducibility. Particularly, in order to electrically mix the electrophoretic particles having different colors, as a short-cycle driving waveform is applied to the display device for a relatively long time, there are problems that power consumption for implementing the specific color increases, and the lifespan is relatively short due to repeated collisions between the particles.

### DISCLOSURE OF THE INVENTION

### TECHNICAL PROBLEM

An object of the present invention is to provide a reflective custom color display device, in which a specific color is realized by mixing a plurality of particles having different colors, wherein, since electrophoretic particles mixed to implement a specific color have charges with the same polarity, and a deviation in charge between the particles is not large, and thus, a threshold voltage and response time are similar to move simultaneously at the same driving voltage (uniform electric field), a process of electrically arranging and mixing the particles, which directly affect unnecessary color display and flickering of a display part during a color conversion process, is not required to reliably and reproducibly implement a specific color in a relatively simple driving method, and a method for controlling the same.

In addition, an object of the present invention is to provide a structure of a display device, which is capable of minimize movement of electrophoretic particles to implement a specific color and improving a lifespan of the electrophoretic particles, reducing an update time required to change colors compared to conventional technologies, and efficiently shortening a development time for implementing various specific colors and reducing manufacturing costs, and a method for controlling the same.

### TECHNICAL SOLUTION

The present invention provides a reflective custom color display device including: an upper electrode (101) and a lower electrode (104), which are disposed on side surfaces of a substrate, respectively; and a display layer (106) comprising a fluid, wherein the fluid comprises three or more types of particles and displays two or more colors by the particles, wherein any one of the colors is displayed as a first color in which two or more types of particles having the same charge polarity and threshold voltage are mixed.

The particles may have a polarity of a negative charge, a positive charge, or a neutral charge.

The mixed color may represent a colored color and adjusted saturation depending on a composition ratio of the plurality particles having each color.

In addition, a second color may be displayed by including one or more types of particles having a different color from the first color and having the same threshold voltage, but an opposite charge polarity compared to the two or more types of particles having the first color in which the color is mixed.

In addition, a third color may be displayed by further including one or more types of particles having a different threshold voltage compared to the particles displaying the first and second colors.

In addition, a fourth color may be displayed by further including one or more types of particles having the same threshold voltage, but an opposite charge polarity compared to the particles displaying the third color.

In addition, two or more types of particles having the same charge polarity and threshold voltage may have a polarity of a positive charge or a negative charge, and the remaining particles may further include one or more types of particles having a polarity of a neutral charge to display a second color.

In addition, a third color may be displayed by further including one or more types of particles having the same threshold voltage, but an opposite charge polarity compared to the particles displaying the first color.

In addition, a fourth color may be displayed by further including one or more types of particles having a different threshold voltage compared to the particles displaying the first, second, and third colors.

In addition, a fifth color may be displayed by further including one or more types of particles having the same threshold voltage, but an opposite charge polarity compared to the particles displaying the fourth color.

In addition, a sixth color may be displayed by further including one or more types of particles having a different threshold voltage compared to the particles displaying the first, second, third, fourth, and fifth colors.

In addition, a color different from the first color may be displayed by including the particles having the same color as any one of the mixed particles having the first color, but a different threshold voltage or charge polarity.

In the present invention, the mixed color may be expressed by mixing two or more types of particles having different colors and having the same charge polarity and the same threshold voltage, and two to eight types, two to six types, two to five types, two to four types, or two to three types of particles may be mixed to be used depending on a color and saturation.

### ADVANTAGEOUS EFFECTS

According to the related art, when compared to the conventional technologies, the specific custom color may be stably and reproducibly implemented through the relatively simple driving method without the process of electrically arranging and mixing each particle, which directly affects the unnecessary color display and flickering of the display unit during the color conversion process.

In addition, the movement of the electrophoretic particles may be minimized to implement the specific color, the lifespan of the electrophoretic particles may be improved, the update time required to change the colors may be significantly reduced compared to the related art, and the power consumption may be reduced.

In addition, since the colors are implemented without electrically mixing the plurality of particles having the different colors, the driving stability may be secured compared to the related art even with the repeated driving.

In addition, since the complicated process development is not required to implement the various custom colors, the development time may be efficiently shortened, and the manufacturing costs may be reduced.

### BRIEF DESCRIPTION OF THE DRAWINGS

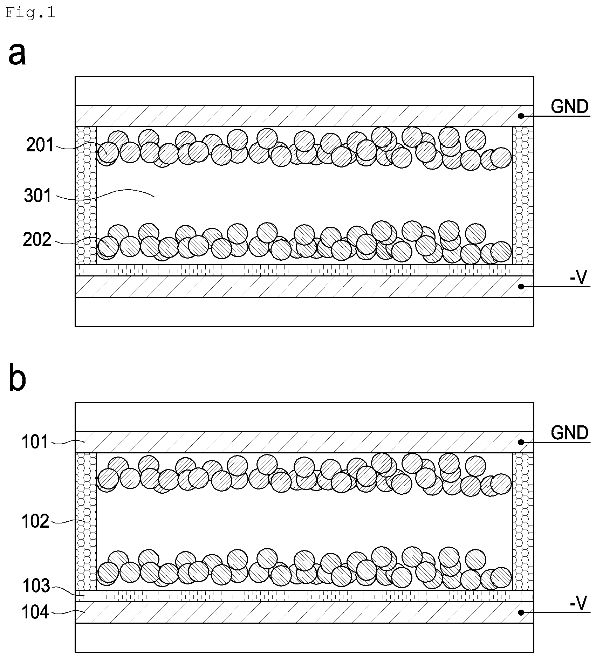

FIG. 1 is a cross-sectional view illustrating a panel structure of an electrophoretic display device in which a medium is a clear fluid.

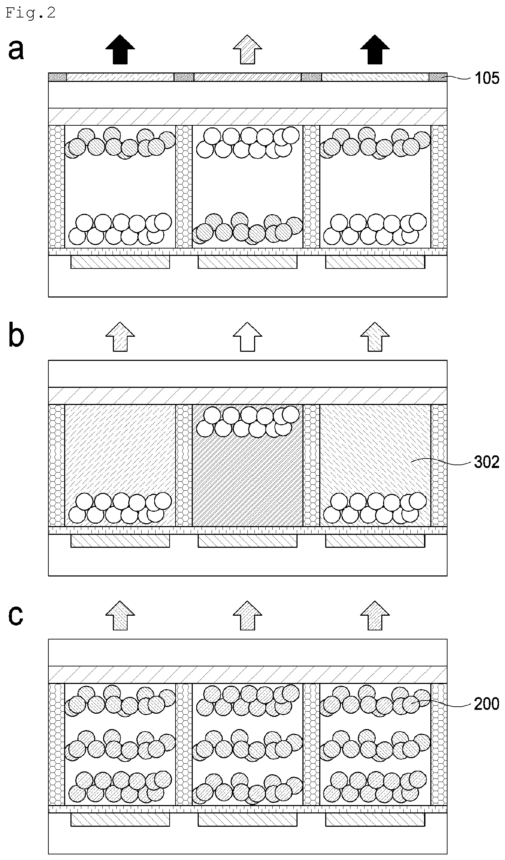

FIG. 2 is a cross-sectional view illustrating a panel structure of a conventional electrophoretic display device for color implementation.
FIG. 3 is a schematic view illustrating color combination and color implementation of electrophoretic particles.
FIG. 4 is a cross-sectional view illustrating a structure, configuration, and method of implementing a specific color of electrophoretic particles of the conventional electrophoretic display device that implements the specific color by using the electrophoretic particles having different unique colors and threshold voltages.
FIG. 5 is a cross-sectional view illustrating a panel structure of a display device having a structure and configuration of electrophoretic particles and implementing a specific color according to an embodiment of the present invention.
FIG. 6a is an image of electrophoretic particles having different colors, and FIG. 6b is an image of electrophoretic particles illustrating various custom colors through combinations of the different colored particles of FIG. 6a.
FIG. 7 is an image demonstrating a custom color of the display device manufactured according to an embodiment of the present invention.
FIG. 8a is an image demonstrating the custom color of the display device manufactured according to an embodiment of the present invention, FIG. 8b is an image of a target custom color, and FIG. 8c is an image demonstrating a custom color of a display device to which the conventional technology having different threshold voltages is applied.
FIG. 9 is a cross-sectional view illustrating a panel structure and a control method of the display device including the configuration of the electrophoretic particles according to an embodiment of the present invention.
FIG. 10 is an image of the display device in which a first color and a second color are implemented by controlling various colors and saturations by combining the electrophoretic particles having different colors according to an embodiment of the present invention.
FIG. 11 is a cross-sectional view illustrating a structure and control method of a display device including neutral particles according to an embodiment of the present invention.
FIG. 12 is a cross-sectional view illustrating a structure of a display device capable of implementing three or more colors according to an embodiment of the present invention.
FIG. 13a is an image demonstrating three colors as a result of an experiment in which the display device of FIG. 12a according to an embodiment is manufactured and driven, and FIG. 13b is an image demonstrating three colors as a result of an experiment in which the display device of FIG. 12b according to an embodiment is manufactured and driven.
FIG. 14 is an image demonstrating five or more colors as a result of an experiment in which a display device manufactured by combining the embodiments of FIGS. 12c and 12d is driven.
   101 : First electrode (upper electrode) 102 : Partition wall (barrier ribs)
   103 : Sealing layer and conductive adhesive layer
   104 : Second electrode (lower electrode)
   105 : Color filter 106 : Display layer
   200 : Color particle 201 : First particle
   202 : Second particle 203 : Third particle
   204 : Fourth particle 205 : Fifth particle
   206 : Sixth particle 207 : Neutral particle
   301 : Clear fluid 302 : Colored fluid
   303 : Microcapsule 304 : Binder

### MODE FOR CARRYING OUT THE INVENTION

Since the present invention may have diverse modified embodiments, preferred embodiments are illustrated in the drawings and are described in the detailed description of the invention. Effects and features of the present invention, and implementation methods thereof will be clarified through following embodiments described with reference to the accompanying drawings. The present invention may, however, be embodied in various forms and should not be construed as limited to the embodiments set forth herein.

Hereinafter, embodiments of the present invention will be described in detail with reference to the attached drawings. When describing with reference to the drawings, identical or corresponding components are given the same drawing reference numerals, and redundant descriptions thereof are omitted.

In the embodiments below, the terms first, second, etc., are not used in a limiting sense but are used for the purpose of distinguishing one component from other embodiments. In addition, in the embodiments below, singular expressions include plural expressions unless the context clearly indicates otherwise.

In the embodiments below, the terms such as "include" or "have" mean that a feature or component described in the specification is present, and do not exclude in advance the possibility that one or more other features or components may be added.

The present invention relates to a reflective custom color display device using electrophoresis technology.

The present invention provides a reflective custom color display device including: an upper electrode 101 and a lower electrode 104, which are disposed on side surfaces of a substrate, respectively; and a display layer 106 including a fluid. Here, the fluid contains three or more types of particles and display two or more colors by the particles, and any one of the colors is displayed as a first color in which two or more types of particles having the same charge polarity and threshold voltage are mixed.

The particles may have a polarity of a negative charge, a positive charge, or a neutral charge.

The mixed color may exhibit a tinted color and adjusted saturation depending on a composition ratio of the plurality of particles having each color.

In addition, a second color may be displayed by including one or more types of particles having a different color from the first color and having the same threshold voltage, but an opposite charge polarity when compared to the two or more types of particles having the first color in which the colors are mixed.

In addition, a third color may be displayed by further including one or more types of particles having a different threshold voltage when compared to the particles displaying the first and second colors.

In addition, a fourth color may be displayed by further including one or more type of particles having the same threshold voltage, but an opposite charge polarity when compared to the particles displaying the third color.

In addition, the charge polarity of two or more types of particles having the same charge polarity and threshold voltage may be positive or negative charge, and the remaining particles may include at least one type of particle having a neutral charge polarity to display the second color.

In addition, the third color may be displayed by further including one or more particles having the same threshold voltage, but an opposite charge polarity when compared to the particles displaying the first color.

In addition, the fourth color may be displayed by further including one or more types of particles having a different threshold voltage when compared to the particles displaying the first, second, and third colors.

In addition, a fifth color may be displayed by further including one or more particles having the same threshold voltage, but an opposite charge polarity when compared to the particles displaying the fourth color.

In addition, a sixth color may be displayed by further including one or more types of particles having a different threshold voltage when compared to the particles displaying the first, second, third, fourth, and fifth colors.

In addition, a color different from the first color may be displayed by including particles having the same color as any one of the mixed particles having the first color, but different threshold voltage or charge polarity.

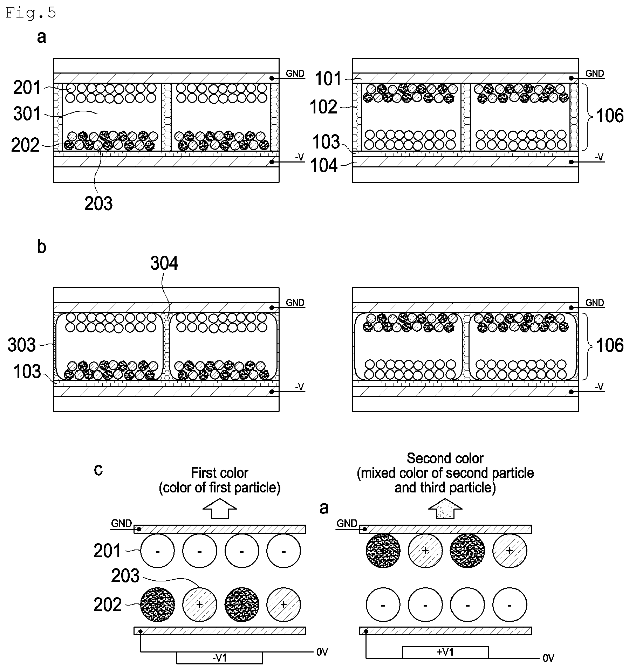

FIG. 5 is a cross-sectional view illustrating a panel structure of a reflective custom color display device according to an embodiment of the present invention.

Referring to FIG. 5, an upper electrode 101 and a lower electrode 104 disposed at a position opposite to the upper electrode 101 are provided to generate an electric field. Here, one or more of the upper electrode 101 and the lower electrode 104 may be patterned, and a voltage may be applied independently to each patterned electrode. A display layer 106 provided with a clear electrophoretic fluid 301 containing at least one type of colored electrophoretic particles therein may be disposed between the upper electrode 101 and the lower electrode 104.

Referring to FIG. 5a, when the display layer 106 is configured in the form of a plurality of unit cells separated by a partition wall(barrier rib) 102, after the plurality of unit cells are defined by the partition wall 102 on the upper electrode, a sealing layer is provided to prevent a fluid from leaking or escaping after the fluid containing electrophoretic particles is injected or filled into the unit cells. In addition, a conductive adhesive layer 103 is provided between the sealing layer and the lower electrode 104 so that the electric field is generated in the display layer 106 by a voltage applied from the outside, and the display layer 106 and the lower electrode 104 are attached or laminated to each other. Here, when an adhesive layer performing the function of the sealing layer is applied to the conductive adhesive layer 103, the sealing layer may not be provided.

Referring to FIG. 5b, when the fluid containing electrophoretic particles is sealed in the form of a microcapsule 303, the microcapsules 303 are mixed with a binder 304 to prepare slurry, and then, the slurry containing the microcapsules 303 is applied on the upper electrode 101 and then cured or dried to form the display layer 106 with a layer of the plurality of microcapsules 303, and the conductive adhesive layer 103 is provided between the layer of the microcapsules 303 and the lower electrode 104.

Referring to FIG. 5c, the electrophoretic particles contained in the fluid have different colors. Here, the electrophoretic particles 201 implementing the first color and the plurality of electrophoretic particles 202 and 203 implementing the second color, which is a custom color, are combined with each other, and the electrophoretic particles 201 implementing the first color have to be set to have a charge having a polarity opposite to the polarity of the charge of the electrophoretic particles 202 and 203 implementing the second color. In addition, the plurality of electrophoretic particles 202 and 203 having different colors that implement the second color have charges having the same polarity, and the electrophoretic particles contained in the fluid have to be set so that a deviation in amount of charges is not large so that the electrophoretic particles move simultaneously in the same direction toward the upper or lower electrode 104 within a uniform electric field. That is, a threshold voltage and response time of each electrophoretic particle are set to be the same. The first electrophoretic particles 201 exhibiting the first color and having the charge having the opposite polarity to the electrophoretic particles 202 and 203 exhibiting the second color have to have the same threshold voltage as the electrophoretic particles 202 and 203 exhibiting the second color, but may have different response times.

Referring to FIG. 5c, since the electrophoretic particles 201 exhibiting the first color and the electrophoretic particles 202 and 203 exhibiting the second color have the same driving voltage, unnecessary colors do not appear on the display part as in the conventional technology of FIG. 4b in the color conversion process, and the electrophoretic particles 202 and 203 having different colors that implement the second color have the same driving voltage and response time and thus does not require the process of electrically mixing the particles as in the conventional technique of FIG. 4c. Thus, when compared to the conventional technologies, since a driving method is relatively simple, and a driving voltage is the same, a highperformance control system for electrically controlling the particles is not required to reduce manufacturing costs of a product to be applied, and the mixing of the first particles 201 having a different charge polarity may be prevented in advance, thereby achieving excellent repetitive color reproducibility. In addition, the color conversion is possible without visually uncomfortable flickering when compared to the conventional technologies, an update time for implementing the custom color may be very short, and thus, power consumption may be low, and a lifespan of electrophoretic particles may be greatly improved.

In addition, according to an example of a method for manufacturing the particles exhibiting the second color, which is a custom color, by mixing the electrophoretic particles, a functional group that imparts a charge to each particle may be stably applied to the particles coated with colored material on a surface thereof or the particles having different colors so as to be set so that a specific charge appears on the surface of the particle, the electrophoretic particles may be primarily manufactured by being dispersed in a clear fluid 301 through additional processes, a mixing ratio of the particles having different colors contained in the fluid may be set by adjusting a mixing ratio of the fluids to reach the custom color, and the particles may be finally mixed with the fluid containing the electrophoretic particles containing the charge having an opposite polarity and exhibiting the first color to manufacture an electrophoretic ink capable of implementing the first and second colors.

Alternatively, the mixing ratio of the particles having different colors used to exhibit the second color may be adjusted to shorten the manufacturing time and reduce the manufacturing costs so as to match the color to be implemented, a surface charge coating process may be performed in a state of being mixed with the particles and then dispersed together with the fluid, and the electrophoretic particles 201 exhibiting the first color may be additionally mixed to manufacturing the electrophoretic ink.

According to the technology of the present invention, the charges may be uniformly and stably applied on the surfaces of particles so that the particles having different unique colors have the same threshold voltage, and a variety of custom colors may be easily implemented by combining and adjusting the mixing ratio of the particles that have the unique colors, such as CMY that is the three primary colors or RGB that is the complementary colors.

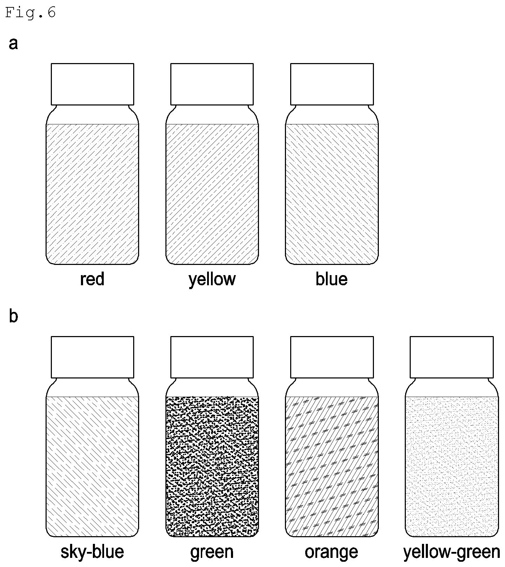

FIG. 6a is an image illustrating different colors of the electrophoretic particles manufactured by applying and drying the particles having the unique color to have the specific charge according to an embodiment of the present invention, and FIG. 6b is an image illustrating different colors of the electrophoretic particles manufactured by adjusting the mixing ratio of the particles having different colors to have various custom colors and then applying and drying the particles to have the same threshold voltage according to an embodiment of the present invention.

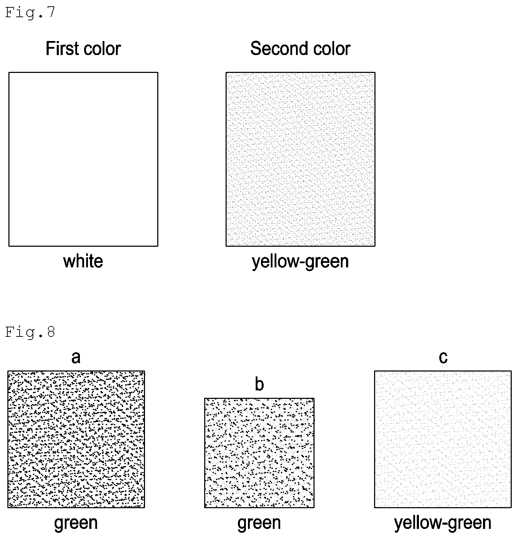

FIG. 7 is an image demonstrating a custom color of the display device manufactured according to an embodiment of FIG. 5b. A mixing ratio of yellow particles and blue particles may be adjusted to exhibit the second color, which is a custom color, thereby setting the custom color, and the process of applying the functional group that imparts the charge may be performed together so that the two particles that implement the second color have a positive charge and move at the same driving voltage. Thereafter, the electrophoretic particles exhibiting the second color and white electrophoretic particles having a negative charge exhibiting the first color were dispersed in the clear fluid 301 to manufacture the electrophoretic ink. Thereafter, the electrophoretic ink manufactured on a base material or substrate coated with the transparent electrode (upper electrode 101) was formed in the form of the microcapsule 303, and slurry mixed with the binder 304 was applied and dried to form the display layer 106 in the form of the microcapsule 303. The display layer 106 was laminated and attached to the lower electrode 104 using the conductive adhesive layer 103 to manufacture a display device for a test, the voltage applied to the upper electrode 101 that acts as a common electrode was set to 0 V or ground voltage (GND), and a voltage of -12 V was applied to the lower electrode 104. As a result, as illustrated in FIG. 5a, it was confirmed that all of yellow and blue electrophoretic particles with positive charges move toward the lower electrode 104, and all of white particles having a negative charge moving toward the upper electrode 101, which is the display part, and the display part has the first color, i.e., a white color. In addition, when +12 V is applied to the lower electrode 104, as illustrated in FIG. 5b, it was confirmed that the white particles having the negative polarity move toward the lower electrode 104 and the yellow and blue particles having the positive polarity move simultaneously toward the upper electrode 101 within the uniform electric field so that the second color in which two particles having different colors are mixed is stably implemented.

FIG. 8 is an image exhibiting the colors of display devices manufactured in the form of microcapsules 303 using the white electrophoretic particles with the negative polarity of the charge that implements the first color according to an embodiment of the present invention and the yellow and green electrophoretic particles having the positive polarity of the charge that implement the second color, which is a custom color. A target color was printed using a color printer to verify the color reproducibility, and then, the electrophoretic particles were mixed to approximate the target color to manufacture the electrophoretic ink. Here, the particles exhibiting the second color applied to the display device (left) to which the technology of the present invention is applied were set to have the same threshold voltage, and the display device (right) to which the conventional technology is applied was set so that threshold voltages of the two particles are different from each other. As a result, the display device to which the technology of the present invention is applied operates reproducibly even when the colors of the electrophoretic particles are electrically driven. However, the display device using the conventional technology has a large difference from the target color compared to the color of the initial electrophoretic particles mixed when electrically driven. Thus, it was confirmed that the second color implemented varies depending on the driving method, and the color reproducibility is unstable, such as some white particles having the opposite polarity of the charges, which are mixed between the yellow and green particles disposed in the display part to implement the custom color as the driving is repeated.

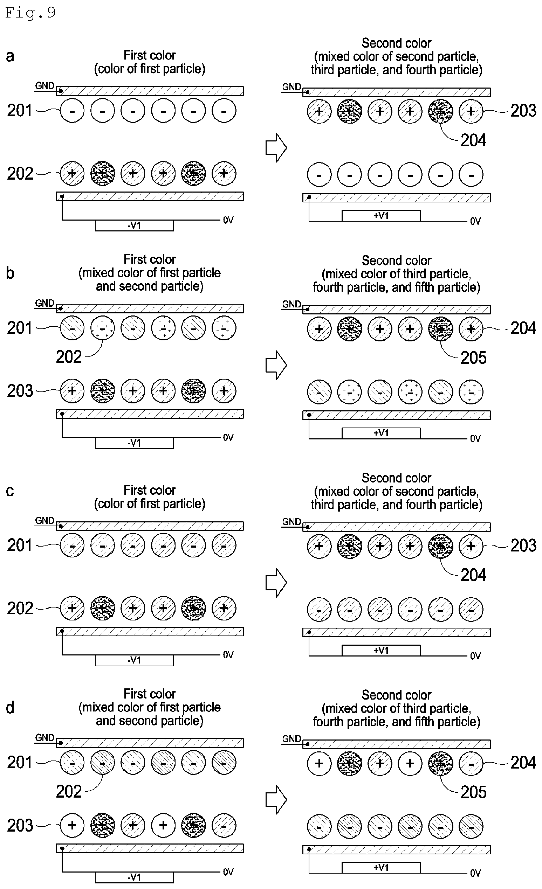

Referring to FIG. 9a, the present invention may implement a color by combining three or more types of electrophoretic particles to implement the second color, which is the custom color. Here, the polarity and the threshold voltage of the charge of the particles 202, 203, and 204 exhibiting the second color have to be the same.

Referring to FIG. 9b, the present invention may implement another custom color by combining one or more types of electrophoretic particles having different colors to implement the first color. Here, the polarity and the threshold voltage of the charge of the particles exhibiting the first color have to be the same, and the charge has to have a polarity opposite to that of the particles exhibiting the second color.

Referring to FIG. 9c, the color of at least one type of particle among the particles applied to implement the second color may have the same color as the particles 201 used to implement the first color. Here, the charges of the particles 201 implementing the first color and the particles 202, 203, and 204 implementing the second color have to have opposite polarities or different electrical driving characteristics.

Referring to FIG. 9d, the present invention may control a saturation of the color implemented by using white or black electrophoretic particles that reflect or absorb light incident from the outside together when implementing a specific custom color by combining the electrophoretic particles having different colors.

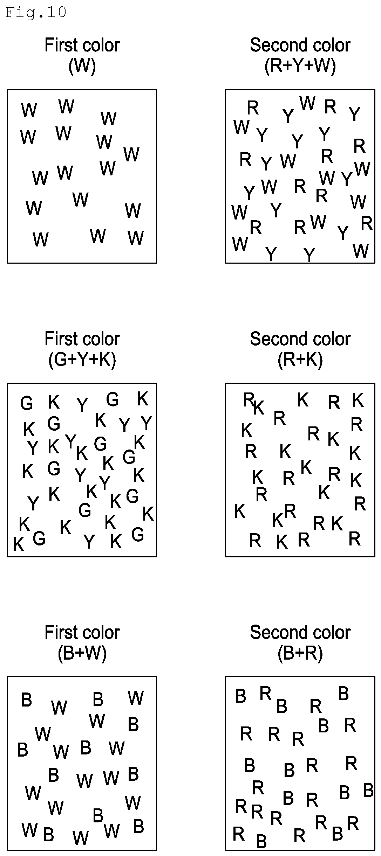

FIG. 10 is an image of the display panel according to an embodiment of FIG. 9, which implements the first color and the second color, and expresses the colors by combining the colors of the particles used to implement each color.

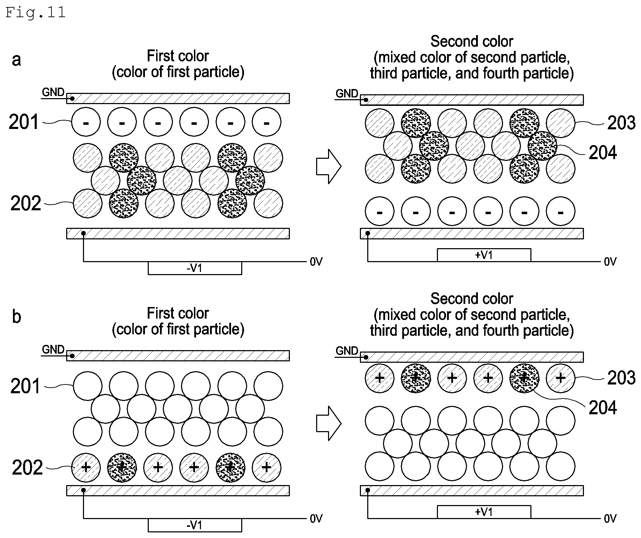

As illustrated in FIG. 11a, the present invention may be applied to a method for implementing the second color, which is the custom color, by mixing the neutral particles 207 that are electrically neutral with no charge or an extremely low charge and have different colors. Here, the color conversion of the display part is implemented by vertical movement and position within the display layer 106 due to the electrical mobility of the electrophoretic particles 201 used to exhibit the first color.

As illustrated in FIG. 11b, the present invention may apply the particles 201 exhibiting the first color as the neutral particles 207 and may exhibit the second color, which is the custom color, through a combination of the mixed particles 202, 203, and 204.

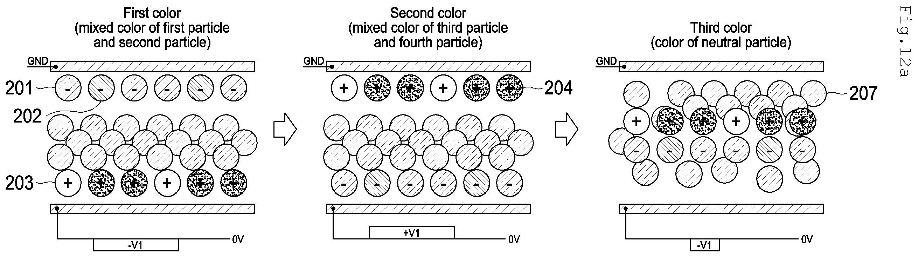

Referring to FIG. 12a, the display panel according to FIGS. 11a and 11b may implement three or more colors by combining the plurality of electrophoretic particles 201 and 202 having different colors that have the positive or negative charge and exhibit the first color, the plurality of electrophoretic particles 203 and 204 having different colors that have a polarity opposite to that of the electrophoretic particles exhibiting the first color and exhibit the second color, and the neutral particles 207 that are electrically neutral and exhibit the third color. The electrophoretic particles 201 and 202 exhibiting the first color and the electrophoretic particles 203 and 204 exhibiting the second color have to have the same driving voltage, and when the driving voltage is applied, if the driving voltage is applied for a sufficient time toward the upper or lower electrodes 104 through which a voltage having a polarity opposite to that of the charges of the electrophoretic particles flows, the display part may implement the first color and the second color depending on the direction of the electric field, and the electrically neutral particles 207 may be disposed between the electrophoretic particles 201 and 202 implementing the first color and the electrophoretic particles 203 and 204 implementing the second color in the display layer 106. Here, if the driving voltage is applied for a time shorter than a response time required for all the electrophoretic particles implementing the first color and the second color to move toward the upper and lower electrode, or the driving voltage having a voltage less than the threshold voltage is applied, the electrophoretic particles may be disposed between the neutral particles 207 and the display part that displays the third color.

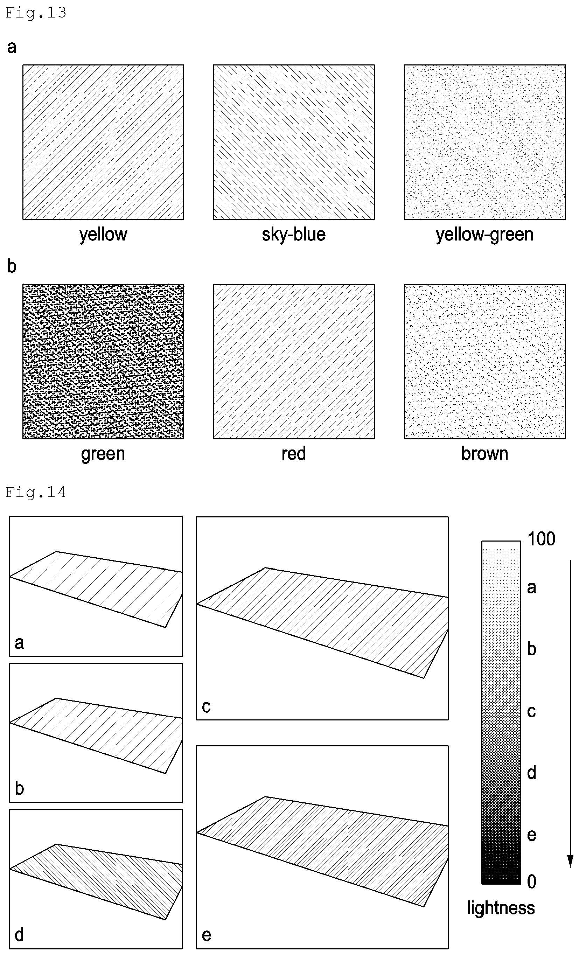

FIG. 13a is an image implementing three colors using the display device of FIG. 12a according to an embodiment. The first and second colors were implemented by combining the plurality of electrophoretic particles having different colors, and the third color was implemented by using the electrically neutral green neutral particles 207.

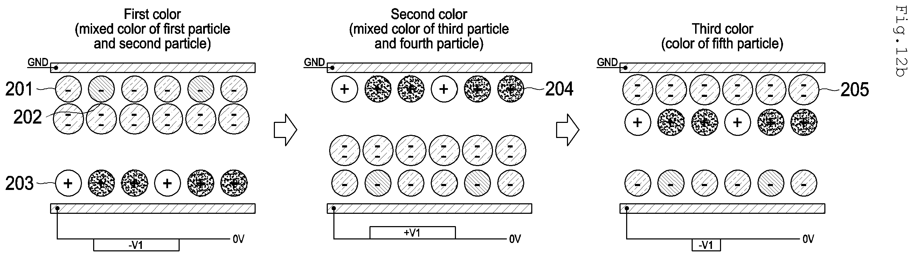

As illustrated in FIG. 12b, the present invention may implement three or more colors by using the electrophoretic particles 205 having different threshold voltages compared to the electrophoretic particles 201202 implementing the first custom color and the electrophoretic particles 203 and 204 implementing the second custom color instead of the neutral particles 207. Here, all the threshold voltages of the plurality of electrophoretic particles that implement the first color and implement the second color have to be the same. If the electrophoretic particles that implement the third color have a threshold voltage less than that of the electrophoretic particles that implement the first and second colors, the third color may be exhibited by applying a voltage less than the threshold voltage of the electrophoretic particles that implement the first and second colors.

FIG. 13b is an image implementing three colors using a display device of FIG. 12b according to one embodiment. The first and second custom colors were implemented by combining the plurality of electrophoretic particles having different colors, and the third color was implemented by using red electrophoretic particles having relatively different threshold voltages.

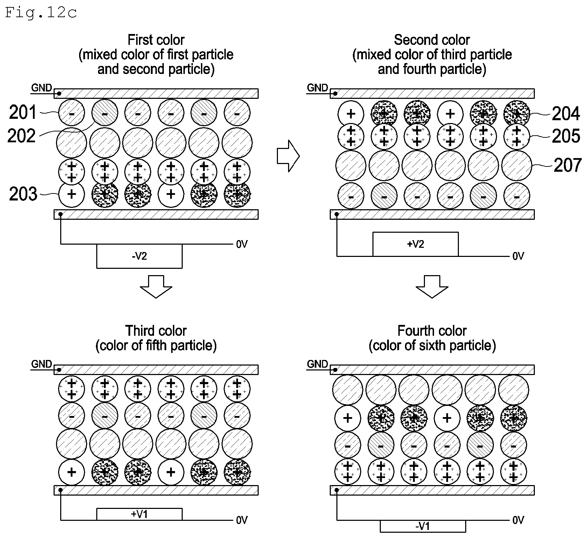

Referring to FIG. 12c, the electrophoretic particles having different threshold voltages from the neutral particles 207 may be applied to the technology of the present invention to implement four or more colors (combination of FIGS. 12a and 12b).

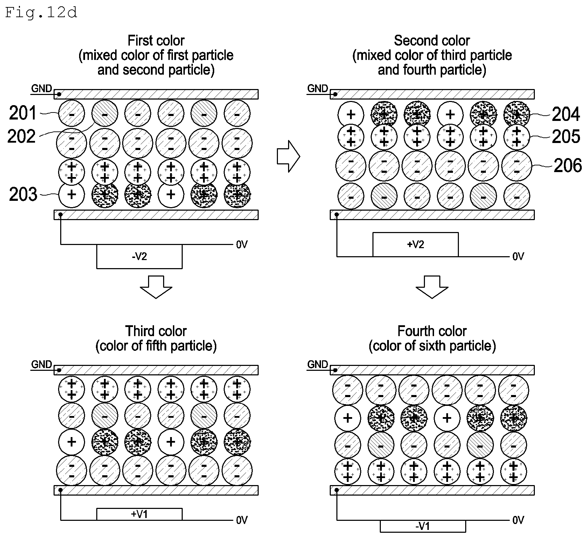

Referring to FIG. 12d, when the electrophoretic particles having different threshold voltages are used compared to the electrophoretic particles implementing the first color and the second color, four or more colors may be implemented by adding the electrophoretic particles having positive and negative charges and different colors and threshold voltages. In addition, the number of colors that are capable of being implemented may increase as the particles having different threshold voltages are added.

FIG. 14 is an image representing that the display devices of FIGS. 12C and 12 according to an embodiment are combined to implement five or more colors and expressing different colors.

A manufacturing process applied to specific embodiments of FIGS. 5 to 14 according to the present invention and material used in the process are as follows.

A display panel according to the present invention is made of a composite material phase in which solid and liquid substances are mixed.

An upper substrate may be a base film made of an optically transparent material with high transmittance, such as glass or a material with high transmittance. The upper substrate may be a transparent polymer film with excellent light transmittance and may be made of polyethersulfone (PES), polyacrylate (PAR), polyetherimide (PEI), polyethylene naphthalate (PEN), polyethylene terephthalate (PET), polyphenylene sulfide (PPS), polyallylate, polyimide, polycarbonate (PC), cellulose triacetate (TAC), etc., but is not limited thereto.

The upper electrode 101 may be provided on one surface of the upper substrate facing a lower substrate. The upper electrode 101 may apply the same voltage to a plurality of display layers 106. The upper electrode 101 may be a common electrode provided in a plate shape so as to be common to the plurality of display layers 106. The upper electrode 101 may be provided at a viewing side and may be made of a transparent conductive material such as indium tin oxide (ITO), indium zinc oxide (IZO), indium zinc tin oxide (IZTO), aluminum zinc oxide (AZO), ZnO, or transparent conductive oxide (TCO).

The fluid may include materials such as water, methanol, ethanol, propanol, butanol, propylene carbonate, toluene, benzene, hexane, chloroform, isoparaffin oil, silicone oil, ester oil, hydrocarbon oil, triethylhexanoin, dimethicone, cetyl pentanoate, dicaprylate, isopropyl myristate, and tocopherol acetate. The fluid may include a fluorescent material, a phosphorescent material, a luminescent material, or a colorvariable material (e.g., a chromophore material, a chromophore dye material, etc.) of which color characteristics are changed when energy is applied.

The microcapsule 303 may be manufactured through a reaction process that forms an emulsion and structures the emulsion into a core-shell form. A polymer precursor that is capable of exhibiting low elasticity and rigid properties may be used as a polymer forming a shell of the microcapsule, and also, copolymers such as urea-formaldehyde, melamine-formaldehyde, and methyl vinyl ether co-maleic anhydride, or polymers such as gelatin, polyvinyl alcohol, polyvinylacetate, cellulose derivatives, acacia, carrageenan, carboxymethylcellulose, hydrolyzed styrene anhydride copolymer, agar, alginate, casein, albumin, and cellulose phthalate may be used, and the polymers may be controlled in hydrophilicity and hydrophobicity to surround a core material, thereby forming the shell. An additive may be added to improve stability of the emulsion. The additive may be an organic polymer having high viscosity and excellent wettability after dissolution in water, and specifically, at least one of gelatin, polyvinyl alcohol, sodium carboxymethyl cellulose, starch, hydroxyethyl cellulose, polyvinylpyrrolidone, or alginate may be used as the additive. The microcapsule may be fixed at a predetermined interval within a layer of the binder 304 so that a space is defined between the microcapsules 303. Due to the spaced space, each microcapsule 303 is not in direct contact with the adjacent microcapsules 303.

The layer of the binder 304 may include a material that is at least partially transparent in a visible light range of 380 nm to 750 nm. The layer of the binder 304 may include at least one transparent polymer material selected from the group consisting of acrylic polymers, silicone polymers, ester polymers, urethane polymers, amide polymers, ether polymers, fluorine polymers, and rubber. In addition, the layer of the binder 304 may include a fluorescent material, a phosphorescent material, a luminescent material, etc., or a material (e.g., a thermochromic pigment material, a thermochromic dye material, etc.) of which color characteristics are changed as energy is applied.

The adhesive layer (or adhesion layer) may include a semiconducting or anisotropically conductive material. The adhesive layer may contain carbon particles, gold particles, aluminum particles, platinum particles, silver particles, plated polymer spheres, plated glass spheres, or ITO particles, or may include conductive polymers such as polyacetylene, polyaniline, polypyrrole, P-DOT, or polythiophene. The adhesive layer (or adhesion layer) may be formed using a pressure sensitive adhesive (PSA). The pressure-sensitive adhesives may be used to prevent changes in optical properties of component member, and a material that does not require high-temperature processes for curing or drying during the bonding may be used. For example, the adhesive layer (or adhesion layer) may use a suitable polymer such as an acrylic polymer, a silicone polymer, polyester, polyurethane, polyether, or synthetic rubber. The adhesive layer (or pressure-sensitive adhesion layer) may use highly elastic silicone rubber, etc., which not only has a simple adhesive layer (or pressure-sensitive adhesion layer) function, but also acts as a cushion to mitigate an impact. The adhesive layer (or adhesion layer) may be curable by energy (e.g., heat or UV, etc.) or may be non-curable.

For example, the adhesive layer (or adhesion layer) may be an insulating organic material and may be made of polyethersulfone (PES), polyacrylate (PAR), polyetherimide (PEI), polyethylene naphthalate (PEN), polyethylene terephthalate (PET), polyphenylene sulfide (PPS), polyallylate, polyimide, polycarbonate (PC), cellulose triacetate (TAC), etc., but is not limited thereto.

The lower substrate may be made of a variety of materials such as plastic or a metal, rather than the optically transparent material. As an example, the lower substrate may include a metal foil including a metal such as silver or aluminum or a plastic film having a rear surface coated with a metal layer.

The lower substrate may be a flexible substrate capable of being bent, flexed, or rolled. In this case, the lower substrate may be a flexible printed circuit board. However, the present invention is not limited thereto, and the lower substrate may be made of a phenol-based or epoxy-based synthetic resin. In this case, the lower substrate may be a rigid printed circuit board. The lower electrode 104 may be provided on one surface of the lower substrate. The lower electrode 104 may apply the same or different voltage to the plurality of microcapsules 303.

The lower electrode 104 may be provided as a single-layer structure of copper, aluminum, indium tin oxide (ITO), or indium zinc oxide (IZO), or a multi-layer structure in which nickel or gold is further laminated on the material of copper, aluminum, ITO, or IZO.

The above-disclosed descriptions are to be considered illustrative, and not restrictive, and the appended claims are intended to cover all such modifications, enhancements, and other embodiments, which fall within the true spirit and scope of the present invention. Thus, the embodiment disclosed in the present specification is to be considered illustrative, and not restrictive, and the spirit and scope of the present invention is not limited to the foregoing embodiment. Therefore, the scope of the present invention is defined not by the detailed description of the invention but by the appended claims, and all differences within the scope will be construed as being included in the present invention.

### INDUSTRIAL APPLICABILITY

According to the present invention, the color display device capable of stably and reproducibly implementing the specific color by mixing the particles having different colors using the simple driving method may be manufactured, and thus, it has industrial applicability.

## Claims

1. A reflective custom color display device comprising:
an upper electrode (101) and a lower electrode (104), which are disposed on side surfaces of a substrate, respectively; and
a display layer (106) comprising a fluid,
wherein the fluid comprises three or more types of particles and displays two or more colors by the particles,
wherein any one of the colors is displayed as a first color in which two or more types of particles having the same charge polarity and threshold voltage are mixed.

2. The reflective custom color display device of claim 1, wherein the particles have a polarity of a negative charge, a positive charge, or a neutral charge.

3. The reflective custom color display device of claim 1, wherein the mixed color represents a colored color and adjusted saturation depending on a composition ratio of the plurality particles having each color.

4. The reflective custom color display device of claim 1, wherein a second color is displayed by comprising one or more types of particles having a different color from the first color and having the same threshold voltage, but an opposite charge polarity compared to the two or more types of particles having the first color in which the color is mixed.

5. The reflective custom color display device of claim 4, wherein a third color is displayed by further comprising one or more types of particles having a different threshold voltage compared to the particles displaying the first and second colors.

6. The reflective custom color display device of claim 5, wherein a fourth color is displayed by further comprising one or more types of particles having the same threshold voltage, but an opposite charge polarity compared to the particles displaying the third color.

7. The reflective custom color display device of claim 1, wherein two or more types of particles having the same charge polarity and threshold voltage have a polarity of a positive charge or a negative charge, and the remaining particles further comprises one or more types of particles having a polarity of a neutral charge to display a second color.

8. The reflective custom color display device of claim 7, wherein a third color is displayed by further comprising one or more types of particles having the same threshold voltage, but an opposite charge polarity compared to the particles displaying the first color.

9. The reflective custom color display device of claim 8, wherein a fourth color is displayed by further comprising one or more types of particles having a different threshold voltage compared to the particles displaying the first, second, and third colors.

10. The reflective custom color display device of claim 9, wherein a fifth color is displayed by further comprising one or more types of particles having the same threshold voltage, but an opposite charge polarity compared to the particles displaying the fourth color.

11. The reflective custom color display device of claim 10, wherein a sixth color is displayed by further comprising one or more types of particles having a different threshold voltage compared to the particles displaying the first, second, third, fourth, and fifth colors.

12. The reflective custom color display device of claim 1, wherein a color different from the first color is displayed by comprising the particles having the same color as any one of the mixed particles having the first color, but a different threshold voltage or charge polarity.

13. A method for driving a reflective custom color display device comprising an upper electrode (101) and a lower electrode (104), which are disposed on side surfaces of a substrate, respectively; and a display layer (106) comprising a fluid,
wherein the fluid contains three or more types of particles and display two or more colors by the particles, and
any one of the colors is displayed as a first color in which two or more types of particles having the same charge polarity and threshold voltage are mixed.
